# EUROPEAN PATENT SPECIFICATION

(11) **EP 3 961 272 B1**
(45) Date of publication and mention of the grant of the patent: **18.06.2025**
(21) Application number: 20192887.6
(22) Date of filing: 26.08.2020
(51) Int. Cl.: B60Q 1/30, G02B 5/02, G02B 5/20

(54) **LIGHTING ASSEMBLY FOR A VEHICLE**
BELEUCHTUNGSANORDNUNG FÜR EIN FAHRZEUG
ENSEMBLE D'ÉCLAIRAGE POUR VÉHICULE

(43) Date of publication of application: 02.03.2022
(73) Proprietor: VOLKSWAGEN AG, 38440 Wolfsburg (DE)
(72) Inventor: Rodriguez Puente, Jose De Jesus, Puebla (MX)

(56) References cited:
- EP-A1- 2 960 574
- US-A1- 2014 160 777
- US-B1- 10 215 360

## Description

The invention relates to a lighting assembly for a vehicle, in particular a rear-lighting assembly or a head-lighting assembly. A further aspect of the invention relates to a vehicle comprising the lighting assembly.

Typical lighting assemblies for vehicles comprise one or more light sources accommodated in a housing which are further surrounded by an outer lens or cover which protects the light source and transmits the emitted light from the internal light source to the outside of the vehicle. This transmitted light provides illumination and indicates information, warnings, driving manoeuvers to observers, other drivers or traffic participants.

DE 10 2012 012 330 A1 discloses a lighting assembly for a vehicle which comprises a cover and a housing with an internal primary light source, wherein a secondary light source is provided which illuminates the coupling edge where the cover is coupled to the housing.

Various new lighting designs for exterior lighting assemblies of vehicles have been developed recently. One particular class of lighting assemblies refers to providing light signatures or light functions which extend over a slit or a gap, for example from a left corner to the centre of the front or the rear of a vehicle. The emitted light of such lighting assemblies is intended to form a common lighting signature.

However, due to the gap or slit an interruption of this extended light signature is generated. This interruption leads to a visual distance of the light signature which is optically recognized by an observer, i.e. by another driver or another traffic participant. Such visual distance may lead to an optical irritation for a receiver due do the disconnection of the light signal. Also, the visual distance leads to a reduced design and reduced aesthetic appearance. Further, the clarity of the signal transmittance is negatively affected due to the disconnection. The EP 2 960 574 A1 discloses a vehicular lamp including a first lamp unit and a second lamp unit separated by a gap. The US 10 215 360 B1 teaches vehicle lamp including a first lamp portion and a second lamp portion separated by a gap, wherein an inner lens and the outer lens spaced from each other have a first fold portion from which both parts extend inward. The US 2014/160777 A1 discloses an additional lighting device with inwardly extending outer lenses.

Therefore it is an object of the underlying invention to reduce the visual distance of emitted light across the gap and thus to improve the continuity of such extended lighting signatures, in particular when viewed under small angles, while still maintaining stability, robustness and also compactness.

In one aspect of the invention, a lighting assembly according to claim 1 is disclosed.

An outer lens may be in other words an outer cover or an outside cover. The outer lens may cover the light source to the outside. The outer lens may be coupled to the respective housing to form an enclosure for the light source. The light source may be any source that is capable of irradiating, reflecting or transmitting light. For example, the light source may be an array of LEDs or any other direct or indirect light emitter as for example a reflective component, a light collimator, a light pipe, a lamp or a light surface or the like. The two light sources may be distinguished in that they are spatially separated from each other. The outer lens may be made of plastic, but the invention is not restricted thereto. The outer lens may have a transparent component. For example, the outer lens may be clear or in other words "white" or may have for example red colour, but the invention is not restricted thereto. A filter may in other words be a light homogenizer element, which may for example form a layer. The filter is configured to homogenize the light that is received form the respective light sources. For example, a filter may be a light diffusor. A filter may comprise scattering particles to scatter light in a diffusive way or may comprise a diffusive surface. The filter may have in other words the function to blur or distribute the light that is coming from the respective light source. The spatial separation and gap formed by the outer lenses may be due to a transition to a trunk-lid, front-lid or a front grill, but the invention is not restricted thereto. The filters are aligned to each other across the gap. For example, they are aligned such that a light function or light signature is intended to be continuous across the gap. In other words, the light signature emitted form the first and second filter, i.e. and the outer lenses, forms or shall form a common light signature that extends over the gap. The inwards extending filter portion may in other words be an inwards extending filter portion that extends along the gap. In even other words, the inwardly extending filter portion may extend inwards from an outer side or outer edge of the respective outer lens or the outer side or outer edge of the filters.

The present invention has the advantage, that due to the inwards extending filter portion, the light is homogenized on the inner surfaces of or along the gap or slit. This has the effect that the visual light distance or light separation over the gap is reduced. The homogenized light emitted by the inwardly extending filter portions may be emitted out of the gap or from the edge to the outside and into a view field of a driver or an external observer. The inwardly extending filter portion thus effectively reduces the visual and optical light separation formed due to the gap. The result is that the light signature to be outputted to an external observer may be improved to be more continuous and steady across the spatial interruption. The design and optical appearance is improved and also the signal transmittance is clearer and less interrupted.

In a preferred embodiment, the inwardly extending filter portions are formed to extend in parallel to each other. When the inwards parallel extending filter portions are viewed by a small angle, which is a common situation, the transmitted light from the parallel inwardly extended filter portions can be viewed by an observer, such that the light signature appears continuous under even small observation angles. Thus, the light signature is made more clear and continuous for the observer.

Preferably, at least one of the inwardly extending filter portions extends to a part of the respective housing. Thus, the inwardly extending portion has substantial length along the gap. When the length is longer, the viewing angle under which the visual light signature appears continuous becomes even smaller and thus visual light distance is further improved.

In a preferred embodiment, at least one of the inwardly extending filter portions is coupled to a connection part of the housing. By fixing the filter portion to the housing, stability of the assembly can be improved. In particular, it is a benefit of the invention, that the inwards extending filter portion can further directly be used for coupling beyond the effect of reducing the light separation. Thus, the wall thickness along the gap does not have to be increased such that despite the effect of reduced light separation, the lateral space can be kept compact.

Preferably, at least one of the inwardly extending filter portions forms a tip portion which is coupled to a base portion of the respective housing by a welding connection. Plastic welding, i.e. vibration welding or also hot gas welding can be used to create a welding connection with the housing. The housing may be a made of plastic, but the invention is not restricted thereto.

In a preferred embodiment, at least one of the housings comprises a channel which is at least partially coated with an adhesive, and wherein a protruding portion of the corresponding inwardly extending filter portion protrudes into the channel and contacts the adhesive. Thereby, the inwardly expending filter portions can be safely glued to the housing portion to be stably fixed to the respective housing part. The channel can support the inserted filter portion and can serve as an accommodation for the adhesive. Depending on the respective materials involved of housing and inwardly extending filter portions, said gluing as described above may be superior compared to a welding process.

In an embodiment not covered by the claims each of the outer lens portions comprises an inwardly extending lens portion, wherein the inwardly extending lens portions extends in an inwards direction on the respective side of the gap such that the gap is between the inwardly extending lens portions, and the inwardly extending filter portions are in direct contact with an inner surface of the respective inwardly extending lens portions. Stability may be increased when the lens portion additionally supports the inwardly extending filter portion and thus the gap of the assembly. The inwardly extending lens portion can then also be used for connecting to the housing.

In an embodiment not covered by the claims, the inwardly extending filter portions are bonded to the inwardly extending lens portion by injection moulding. For example, skin injection moulding can be used for creating a strong bonding between the inwards filter portion and inwards outer lens portion.

Each outer lens portion comprises an end portion on each side of the gap and the inwardly extending filter portions extends in an inwards direction on the respective side of the gap from these end portions. In this case, the effective distance between the filter portions can be reduced. This may improve the visual connection of the lighting even further to create an improved and more continuous light signature or light function.

In a preferred embodiment, a first inwardly extending filter extends inwards by a first length, a second inwardly extending filter extends inwards by a second length, wherein the second length is greater than the first length. For example, the first inwardly extending filter portion may be more central then a second inwardly extending filter portion. An observer may thus have a typical viewing angle on the second inwardly extending filter portion which may then visually close the gap. In another aspect this configuration is of particular use when used for continuous front-lighting assembly. For example, first outer lens and first light source may be a grill light that protrudes towards the front of the vehicle. Then, the different lengths become suitable to install the lighting assembly at the front of the vehicle.

In an embodiment not covered by the claims, the inwardly extending filter portions have the same length as the inwardly extending lens portions. Structural stability of such a configuration may be improved.

In a preferred embodiment, the second inwardly extending filter portion is coupled by adhesion to a portion of the second housing and the first inwardly extending filter portion is coupled by a welding connection to the first housing. The connection thus can be flexibly adapted to the particular situation within the two parts. This allows versatility. For example, the housings may comprise of different materials. Then, the individual couplings may improve the overall structural integrity of the lighting assembly.

The lighting assembly may be a front-lighting assembly or a rear-lighting assembly. Particular embodiments may be advantageous for either front- or rear-lighting assemblies as will be shown below. A front-lighting may also be referred to head-lighting assembly. A rear-lighting assembly may refer to a back-lighting assembly in other words.

In a further aspect of the invention, a vehicle is disclosed comprising a light assembly according to one of the above embodiments or one of the following embodiments. The same advantages directly translate to a vehicle with such lighting assembly.

Further preferred embodiments of the invention will become clearer in the context of the further features of the dependent claims.

The various embodiments of the present invention as disclosed in the following are advantageously combinable with each other are unless not explicitly mentioned otherwise.

The invention is disclosed in the following embodiments in accordance with the corresponding drawings. The drawings show:
- Figure 1: a vehicle according to an embodiment of the invention with a lighting assembly according to an inventive concept,
- Figure 2: a lighting assembly according to a first embodiment of the invention,
- Figure 3: a lighting assembly according to a second embodiment of the invention not covered by the claims,
- Figure 4: a lighting assembly according to a third embodiment of the invention, and
- Figure 5: a vehicle according to an embodiment of the invention with a lighting assembly according to an inventive concept.

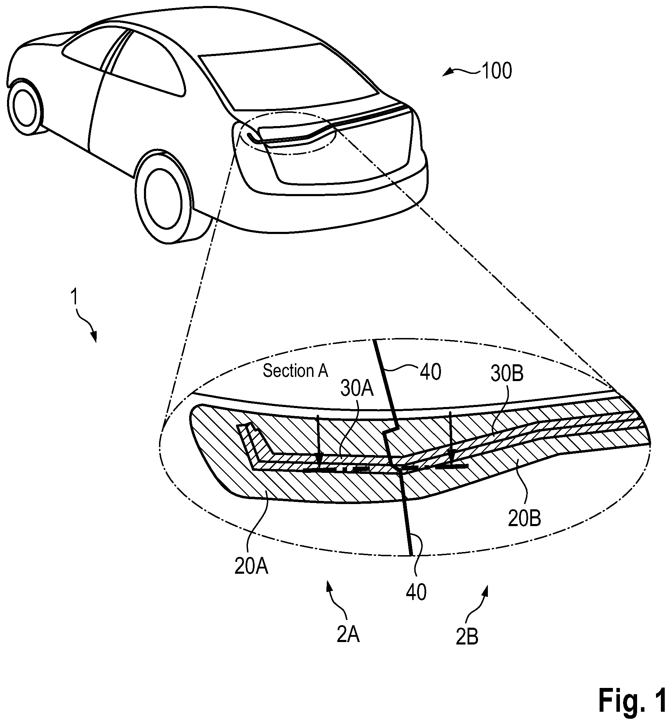

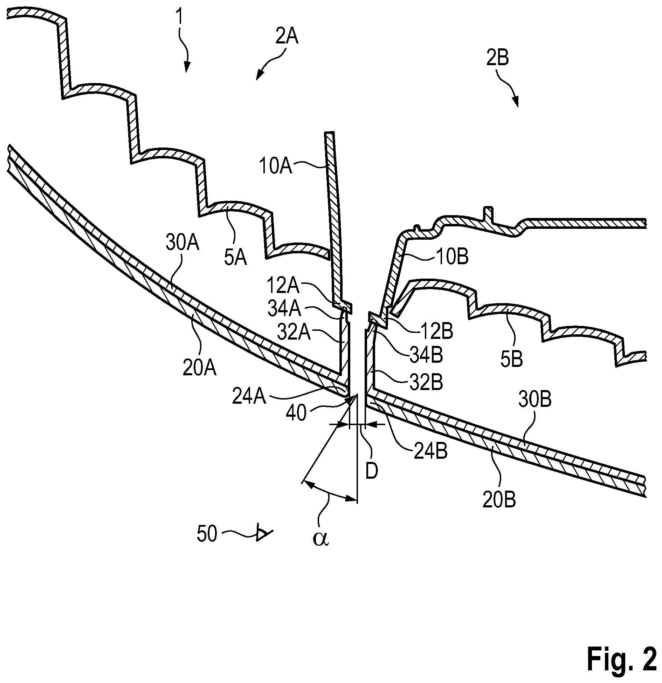

Figure 1 shows a vehicle 100 from a rear view perspective with a lighting assembly 1 according to an inventive concept of the invention. The lighting assembly 1 in this particular example refers to a rear-lighting assembly as illustrated in Fig. 1. The various inventive concepts of the lighting assembly 1 will be explained in more detail in the context of the Figures 2 to 4 and the description thereto.

As can be seen in particular in the enlarged insert of Fig.1, the lighting assembly 1 comprises a first outer lens 20A. The lighting assembly 1 further comprises a first light source, which is positioned, in this perspective, behind the first outer lens 20A (not shown in this perspective). The first outer lens 20A, also referred as an outer cover or outside cover, is configured to emit light to the outside or in other words outwards direction. Similarly, the lighting assembly 1 comprises a second outer lens 20B and a second light source (not shown in this perspective) behind the second outer lens 20B to emit light in outwards direction. The outer lenses 20A, 20B may both be transparent for the emitted light of the respective light source. For example, they may be clear or coloured, e.g. coloured in red, but the invention is not restricted thereto.

The lighting assembly 1 comprises a first filter 30A and a second filter 30B, which are each in direct contact with an inner surface of the respective outer lens 20A, 20B, see this feature in more detail in the Figures 2-4. The filters 30A and 30B are configured to homogenize the respective emitted light from the light source. A light absorber, e.g. a black mask (here not shown explicitly), may surround the filters 30A, 30B such that light emitted by the light sources may only be transmitted in outwards direction or to the outside via the filters 30A, B.

As can be seen in Fig. 1, the outer lenses 20A, 20B are spatially separated from each other by a separation gap 40. The gap 40 may also be referred to as a spaced distance. Thus, the gap 40 may divide the lighting assembly 1 into a first lighting array 2A and a second lighting array 2B separated by said gap 40. In this example, the first lighting array 2A may be rigidly connected to the vehicle 100. The second lighting array 2B may be part of a trunk lid that is movably, i.e. rotatably, coupled to the vehicle 100, see Fig. 1.

The filters 30A, 30B, as can be seen in in the insert of Fig. 1, are aligned with each other. That means in other words that the light signature which is outputted by the first filter 30A of the first lighting array 2A is continued in the second array 2B by the second filter 30B. The light assembly 1 according to the present invention provides substantially improved continuous light signature continuation across the gap 40, in particular when viewed by an observer 50 under an angle, as will be explained in more detail in the following embodiments of the present invention.

Figure 2 shows a lighting assembly 1 according to a first embodiment of the present invention in a top view perspective according to section A as indicated in Fig. 1.

The lighting assembly 1 comprises the first light source 5A and the second light source 5B which are configured to emit light. The light sources 5A, 5B may be an array of LEDs, a lamp, a light collimator, a light pipe or a light reflector, but the invention is not restricted thereto.

Each of the light sources 5A, 5B is accommodated at least partially in a respective housing 10A, 10B. In this figure, only the relevant parts of the housings 10A, 10B are shown for the sake of compactness and the skilled person recognizes a continuation of the housings 10A, 10B to form an at least partial enclosure for the light sources 5A, 5B. The housings 10A, 10B may be made of plastic, but the invention is not restricted thereto. For example, also aluminium may be used or a combination thereof. The light sources 5A, 5B are separately provided from each other. However, the light sources 5A, 5B may be controlled to simultaneously emit light such that a common light signature or common light function may be generated by the two light sources 5A, 5B.

The light assembly 1 may comprise a first outer lens 20A, in other words an outer cover, which corresponds to the first light source 5A and a second outer lens 20B which corresponds to the second light source 5B. The outer lenses 20A, 20B may cover the light sources 5A, 5B towards the outside direction. Each of the outer lens 20A, 20B is transparent for the emitted light of the respective light sources 5A, 5B. The outer lenses 20A, 20B may be coupled, not shown in this section view, to the respective housing to form a common enclosure for the light sources 5A, 5B.

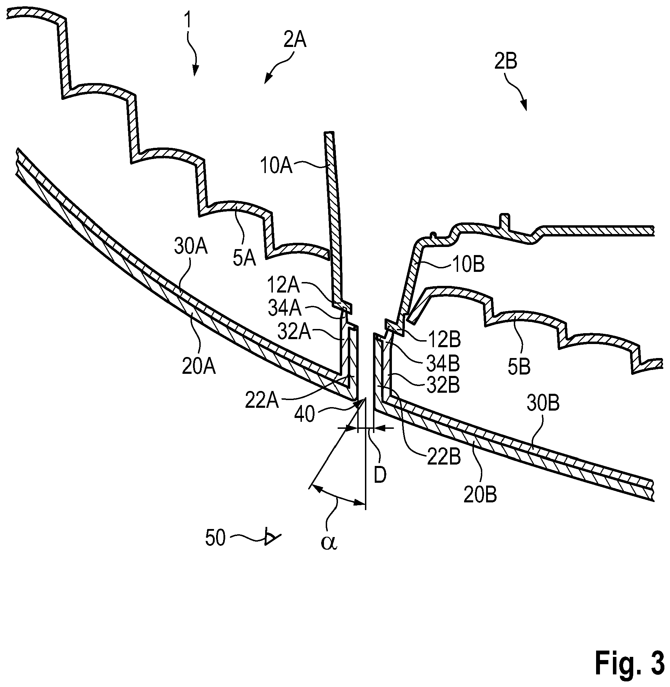

The light assembly 1 further comprises a first filter 30A and a second filter 30B. Both of the filters 30A, 30B are, as shown in Figure 2 and also the Figures 3 to 4, in direct contact, for example bonded, with an inner surface of the respective outer lenses 20A, 20B. The filters 30A, 30B may be in the form of a layer or a coating. The filters 30A, 30B homogenize or blur the emitted light coming from the light sources 5A, 5B. A filter 30A, 30B may be in other words a light homogenization element, for example a diffusor, a translucent material or a surface-treated material or the like. Again, an absorber, e.g. black mask, may surround the filters 30A, 30B to restrict the light output to the area of the outer lens 20A, 20B which is occupied by the filter 30A, 30B. The absorber may thus give a definition of the light function. Due to the direct contact of the filters 30A, 30B with the outer lenses 20A, 20B, it appears for an observer that the light is effectively created in outermost parts of the outer lenses 20A, 20B.

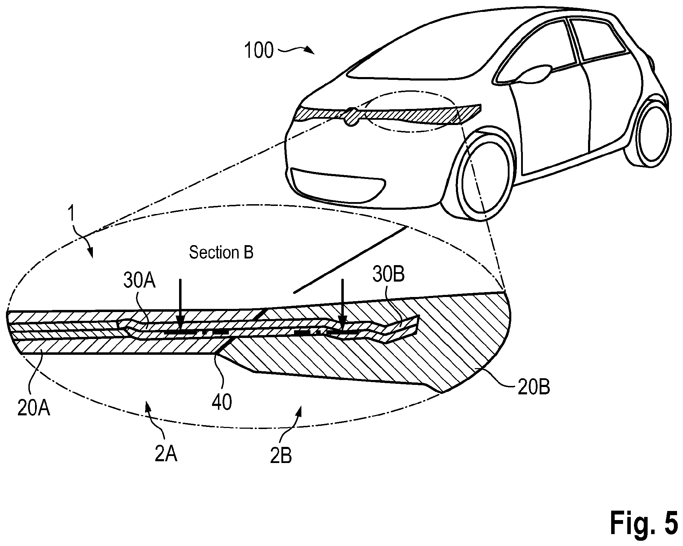

The outer lenses 20A, 20B are spatially separated from each other by a separation gap 40. The gap 40 may also be referred to as a spaced distance. The gap 40 may be present due to the presence of a lighted rear lid, front lid or a front grill, see e.g. the examples provided in Figures 1 and 5. Thus, the gap 40 may be required to move or detach different parts separately from each other. The filters 30A, 30B are formed to be aligned with each other, in particular aligned across the gap 40. Due to the alignment of the filters 30A, 30B, it is anticipated to provide a common light signature or common light function which continuous across the gap 40, see for examples the Figs. 1 and 5. The common light signature is, however, interrupted by said gap 40.

The filters 30A, 30B, or at least one of them, comprise a respective inwardly extending filter portion 32A, 32B. The inwardly extending filter portion 32A, 32 B extends in an inwards direction on a respective side of the gap 40, see the Figure 2 thereto. The inwardly extending filter portions 32A, 32B extend inwards such that the gap 40 is formed between the inwardly extending filter portions 32A, 32B. In other words, the inwardly extending filter portion 32A, 32B may extend inwards from an outer side of the respective outer lens 20A, 20B or the outer side of the filters 30A, 30B, as can be seen for example in relevant Fig. 2 or the other embodiments of the present invention.

The inwardly extending filter portions 32A, 32B homogenize light which reaches the inwardly extending filter portions 32A, 32B from the respective light sources 5A, 5B. The inner sides of the gap 40 thus emit homogenized light received from the light sources 5A, 5B. When an observer 50 views the light signature across the gap 40, homogenized light emitted from the inwardly extending portion 32A, 32B and thus from the outermost edges and inner surfaces along the gap 40 which may reach the eye of the observer or driver. No additional light source is required to reach the effect.

The inwardly extending filter portions 32A, 32B lead to a reduction of the so called "light clearance" which is the visual lighting distance over or across the gap 40. When the invention is applied, this light clearance can be advantageously reduced down to 3 mm with the inwardly extending filter portion 32A, 32B which is quasi continuous compared reference cases of 16 mm without any filter portions. Thus, the lighting signature across the gap 40 is made more continuous, which is achieved by forming said inwardly extending portion 32A, 32B. Further, when an observer 50 or driver views the gap 40 under an angle α, e.g. a small angle α may be already sufficient as it commonly occurs in traffic situations, substantial light from at least one of the inwardly extending portion 32A, 32B may reach the eye of the observer 50, for example a traffic participant, through the gap 40. Thus, the homogenized light produced from the inwardly extending filter portion 32A, 32B visually reduces or even closes the light separation depending on the observation angle α, see e.g. Fig. 2.

For example, as can be seen in Figure 2, the inwardly extending filter portions 32A, 32B may be formed to extend in parallel to each other. Then, the distance D between the inwardly extending filter portions 32A, 32B may be constant and when viewed by an arbitrary angle α the emitted light received from at least one of the inner walls parallel and inwardly extending filter portions 32A, 32B may reduce the visual light distance.

In particular, the inwardly extending filter portions 32A, 32B may extend up to a part of the respective housing 10A, 10B. Then, a maximum length is used for the inwardly extending filter portions 32A, 32B, such that already for small angles α the above effect may improve the visual distance across the gap 40.

Each of the outer lenses 20A, 20B comprises an end portion 24A, 24B on each side of the gap 40. That means that the outer lens 20A, 20B is not used to form the gap 40 but only the inwardly extending filter portions 32A, 32B is used for forming the gap 40. The inwardly extending filter portions 32A, 32B then extends in an inwards direction on a respective side of the gap 40 from said end portions 24A, 24B. Such a configuration reduces the required lateral thickness of the lighting assembly 1 at the gap 40, since the inwardly extending filter portion 32A, 32 B takes over the role of the outer lens at the inner sides of the gap 40. Thus, compactness is maintained despite having the additional function of light signature continuity across the gap 40.

The inwardly extending filter portions 32A, 32B may be coupled to a connection part of the housing 10A, 10B. In this particular example, the inwardly extending filter portions 32A, 32B forms a tip portion 34A, 34B. The tip portion 34A, 34B may be narrower in thickness than the body of the inwardly extending filter portions 32A, 32B. The tip portion 34A, 34 B may be coupled to a base portion 12A, 12B of the respective housing 10A, 10B by a welding connection. The housing 10A, 10B may comprise a plastic material. The inwardly extending filter portions may also comprise as base material a plastic, e.g. PMMA. Therefore, plastic welding may preferably ne used to provide a stable connection. In alternatives, vibration welding or hot gas welding may take place.

Figure 3 shows a lighting assembly 1 according to a second embodiment not covered by the claims. In the following, only the differences with respect to Figure 2 are described. The present embodiment differs mainly from Fig. 2 in that each of the outer lenses 20A, 20B comprises an inwardly extending lens portion 22A, 22B.

The inwardly extending lens portions 22A, 22B may extend in an inwards direction on the respective side of the gap 40 such that the gap 40 may be formed between the inwardly extending lens portions 22A, 22B. In particular, the inwardly extending filter portions 32A, 32B may be in direct contact with an inner surface of the respective inwardly extending lens portion 22A, 22B. Therefore, the received light from the inwardly extending filter portions 32A, 32B is emitted homogeneously from the inwardly extending lens portions 22A, 22B to reach the effect of reduced visual distance, e.g. when viewed under angle α. The inwardly extending lens portions 22A, 22B in this embodiment may improve the structural support of the lighting assembly 1. For example, it may be used to support the inwardly extending filter portions 32A, 32B as can be seen in the present Figure. The inwardly extending lens portions 22A, 22B may have end portions which are covered by the inwardly extending filter portions 32A, 32B. The direct contact can be performed by various bonding or mechanical connection techniques. In a preferred embodiment, the inwardly extending filter portions 32A, 32B are bonded to the inwardly extending lens portion 22A, 22B by skin injection moulding.

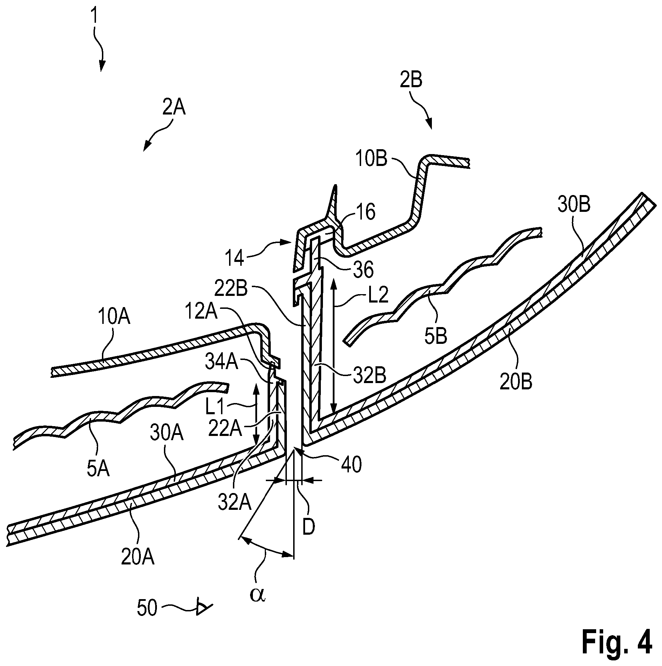

Figure 4 shows a lighting assembly 1 according to a third embodiment of the invention. Also here, only the differences with respect to the Figures 2 and 3 are disclosed and for common features it is herewith referred to the description of the previous embodiments. This particular embodiment may be a top view section B as indicated in the following Figure 5, but is not restricted thereto may also be a section A.

In this particular example, the first inwardly extending filter 32A extends inwards by a first length L1 and the second inwardly extending filter 32B extends inwards by a second length L2. Here, the second length L2 is greater than the first length L1. These features can also be applied to the previous embodiments of the Figures 2 and 3, such that also these embodiments may have different lengths L1, L2. Such an embodiment can with advantage be used for a front (head)-light assembly as disclosed in the following Fig. 5. For example the first housing 10A may accommodate a grill light source and thus may protrude to the front compared to the second housing 10B of the second light source. Then, the different lengths L1, L2 may compensate for the particular geometry. In a further aspect independent from the grill lighting, the above different lengths L1, L2 may be suitable when there is a preferred observation angle α of the observer 50. In the present case, the second outer lens 20B may refer to an outer array, while the first outer lens 20A may refer to a more central array. That is since the length may determine the angle under which the light may be continuous across the gap 40. Further, not covered by the claims, the inwardly extending filter portions 32A, 32B may have the same length as the inwardly extending lens portions 22A, 22B. As disclosed above in Figure 2, end portions of the outer lenses are provided.

This embodiment also shows a further manner of connecting the inwardly extending filter portion 32B. In particular, the inwardly extending filter portion 32B is glued by an adhesion to a part of the second housing 10B. In this example, the second housing 10B comprises a channel 14 which may be at least partially coated, i.e. filled with an adhesive 16, as illustrated schematically in the present Figure 4. Also both sides could be glued as described in a further embodiment.

The inwardly extending filter portion 32B may be formed to include a protruding portion 36 which at least partially protrudes into the channel 14 and contacts the adhesive 16. In particular, the protruding portion 36 extends into the adhesive 16 to form a glued connection with the housing 10B. In further embodiments, both inwardly extending filter portions 32B are coupled via the described gluing. In further embodiments, one or both of the inwardly extending filter portions 32A, 32B according to the previous embodiments in Figs. 2 and 3 are formed to generate a gluing connection.

In this embodiment, the coupling of the first inwardly extending filter portion 32A to the first housing 10A differs from the coupling of the second inwardly extending filter portion 32B to the second housing 10B. Here, the second inwardly extending filter portion 32B is coupled by adhesion to a portion of the second housing 10B and the first inwardly extending filter portion 32A is coupled by a welding connection to part of the first housing 10A. This may be advantageous, when for example the material of the housings 10A, 10B differ, e.g. metal or plastic or combinations thereof.

Figure 5 shows a vehicle 100 from a front view perspective with a lighting assembly 1 according to an embodiment of the invention. In consequence, the lighting assembly 1 in this particular example refers to a front-lighting assembly. The various inventive concepts of the lighting assembly 1 as they have have been explained in more detail in the context of the detailed embodiments of the Figures 2 to 4 can be also applied to a front-light assembly 1 according to present Figure 5. Preferably, the embodiment of Figure 4 refers to the section B as indicated in Fig. 5.

Compared with Fig. 1, the lighting assembly 1 further comprises a first light source (not shown in this perspective) which is formed to be a grill light source, or in other words a light source for illuminating a grill part, see Fig. 5. The details of the lighting assembly 1 may be taken from one of the previous embodiment, in particular from Fig. 4 for this embodiment.

The filters 30A, 30B are positioned similar as in Fig. 1 and thus a repetition of the content is not performed. The light assembly 1 according to the present invention shows an improved light signature continuation across the gap, in particular when viewed under an angle α by an observer 50 in the context of the embodiments as shown in the Figs. 2 to 4, which are all applicable to the front-lighting assembly, but preferably, the embodiment disclosed in the context of the Figure 4 is applied thereto, see above.

### Reference signs

- 1: lighting assembly
- 2A: first lighting array
- 2B: second lighting array

- 5A: first light source
- 5B: second light source

- 10A: first housing
- 10B: second housing
- 12A: first base portion
- 12B: second base portion
- 14: channel
- 16: adhesive

- 20A: first outer lens
- 20B: second outer lens
- 22A: first inwardly extending lens portion
- 22B: second inwardly extending lens portion
- 24A: first end portion
- 24B: second end portion

- 30A: first filter
- 30B: second filter
- 32A: first inwardly extending filter portion
- 32B: second inwardly extending filter portion
- 34A: first tip portion
- 34B: second tip portion
- 36: protruding portion

- L1: first length
- L2: second length

- 40: gap
- D: distance

- 50: observer
- 100: vehicle

## Claims

1. Lighting assembly (1) for a vehicle, comprising:
- a first light source (5A) and a second light source (5B) each accommodated in a housing (10A, 10B) and configured to emit light;
- a first outer lens (20A) corresponding to the first light source (5A) and a second outer lens (20B) corresponding to the second light source (5B), each outer lens (20A, 20B) being transparent for the emitted light of the respective light source (5A, 5B) in an outwards direction;
- a first filter (30A) and a second filter (30B) configured to homogenize the emitted light;
wherein the outer lenses (20A, 20B) are spatially separated from each other by a separation gap (40) and the filters (30A, 30B) are aligned with each other;
each filter (30A, 30B) further comprises an inwardly extending filter portion (32A, 32B) which extends in an inwards direction on a respective side of the gap (40) such that the gap (40) is formed between the inwardly extending filter portions (32A, 32B), **characterized in that**,
the first filter (30A) and the second filter (30B) are each in direct contact with an inner surface of the respective outer lens (20A, 20B); and
each outer lens (20A, 20B) comprises an end portion (24A, 24B) on each side of the gap (40) and the inwardly extending filter portions (32A, 32B) extend in an inwards direction on the respective side of the gap (40) from these end portions (24A, 24B).

2. Lighting assembly (1) of claim 1, **characterized in that** the inwardly extending filter portions (32A, 32B) are formed to extend in parallel to each other.

3. Lighting assembly (1) of one of the claims 1 to 2, **characterized in that** at least one of the inwardly extending filter portions (32A, 32B) extends to a part of the respective housing (10A, 10B).

4. Lighting assembly (1) of claim 3, **characterized in that** at least one of the inwardly extending filter portions (32A, 32B) is coupled to a connection part of the housing (10A, 10B).

5. Lighting assembly (1) of claim 4, **characterized in that** at least one of the inwardly extending filter portions (32A, 32B) form a tip portion (34A, 34B) which is coupled to a base portion (12A, 12B) of the respective housing (5A, 5B) by a welding connection.

6. Lighting assembly (1) of claim 4, **characterized in that** at least one of the housings (10A, 10B) comprises a channel (14) which is at least partially coated with an adhesive (16), and wherein a protruding portion (36) of the corresponding inwardly extending filter portion (32B) protrudes into the channel (14) and contacts the adhesive (16).

7. Lighting assembly (1) of one of the claims 1 to 6, **characterized in that** a first inwardly extending filter (32A) extends inwards by a first length (L1), a second inwardly extending filter (32B) extends inwards by a second length (L2), wherein the second length (L2) is greater than the first length (L1).

8. Lighting assembly (1) of claim 7, **characterized in that** the second inwardly extending filter portion (32B) is coupled by adhesion to a portion of the second housing (10B) and the first inwardly extending filter portion (32A) is coupled by a welding connection to the first housing (10A).

9. Lighting assembly (1) of one of the claims 1 to 8, **characterized in that** the lighting assembly (1) is a head-lighting assembly.

10. Lighting assembly (1) of one of the claims 1 to 8, **characterized in that** the lighting assembly (1) is a rear-lighting assembly.

11. Vehicle (100), comprising a lighting assembly (1) of one of the claims 1 to 10.

## Patentansprüche

1. Beleuchtungsanordnung (1) für ein Fahrzeug, umfassend:
- eine erste Lichtquelle (5A) und eine zweite Lichtquelle (5B), die jeweils in einem Gehäuse (10A, 10B) untergebracht und konfiguriert sind, um Licht zu emittieren;
- eine erste äußere Linse (20A), die der ersten Lichtquelle (5A) entspricht, und eine zweite äußere Linse (20B), die der zweiten Lichtquelle (5B) entspricht, wobei jede äußere Linse (20A, 20B) für das emittierte Licht der jeweiligen Lichtquelle (5A, 5B) in einer Richtung nach außen transparent ist;
- einen ersten Filter (30A) und einen zweiten Filter (30B), die konfiguriert sind, um das emittierte Licht zu homogenisieren;
wobei die äußeren Linsen (20A, 20B) durch einen Trennspalt (40) räumlich voneinander getrennt sind und die Filter (30A, 30B) aufeinander ausgerichtet sind;
jeder Filter (30A, 30B) ferner einen sich nach innen erstreckenden Filterabschnitt (32A, 32B) umfasst, der sich auf einer jeweiligen Seite des Spalts (40) in einer Richtung nach innen derart erstreckt, dass der Spalt (40) zwischen den sich nach innen erstreckenden Filterabschnitten (32A, 32B) ausgebildet wird,
**dadurch gekennzeichnet, dass**
der erste Filter (30A) und der zweite Filter (30B) jeweils in direktem Kontakt mit einer Innenoberfläche der jeweiligen äußeren Linse (20A, 20B) stehen; und
jede äußere Linse (20A, 20B) einen Endabschnitt (24A, 24B) auf jeder Seite des Spalts (40) umfasst und sich die sich nach innen erstreckenden Filterabschnitte (32A, 32B) auf der jeweiligen Seite des Spalts (40) von diesen Endabschnitten (24A, 24B) in einer Richtung nach innen erstrecken.

2. Beleuchtungsanordnung (1) nach Anspruch 1,
**dadurch gekennzeichnet, dass** die sich nach innen erstreckenden Filterabschnitte (32A, 32B) ausgebildet sind, um sich parallel zueinander zu erstrecken.

3. Beleuchtungsanordnung (1) nach einem der Ansprüche 1 bis 2,
**dadurch gekennzeichnet, dass** sich mindestens einer der sich nach innen erstreckenden Filterabschnitte (32A, 32B) zu einem Teil des jeweiligen Gehäuses (10A, 10B) erstreckt.

4. Beleuchtungsanordnung (1) nach Anspruch 3,
**dadurch gekennzeichnet, dass** mindestens einer der sich nach innen erstreckenden Filterabschnitte (32A, 32B) mit einem Verbindungsteil des Gehäuses (10A, 10B) gekoppelt ist.

5. Beleuchtungsanordnung (1) nach Anspruch 4,
**dadurch gekennzeichnet, dass** mindestens einer der sich nach innen erstreckenden Filterabschnitte (32A, 32B) einen Spitzenabschnitt (34A, 34B) ausbildet, der durch eine Schweißverbindung mit einem Basisabschnitt (12A, 12B) des jeweiligen Gehäuses (5A, 5B) gekoppelt ist.

6. Beleuchtungsanordnung (1) nach Anspruch 4,
**dadurch gekennzeichnet, dass** mindestens eines der Gehäuse (10A, 10B) einen Kanal (14) umfasst, der mindestens teilweise mit einem Klebstoff (16) beschichtet ist, und wobei ein vorstehender Abschnitt (36) des entsprechenden sich nach innen erstreckenden Filterabschnitts (32B) in den Kanal (14) vorsteht und den Klebstoff (16) berührt.

7. Beleuchtungsanordnung (1) nach einem der Ansprüche 1 bis 6,
**dadurch gekennzeichnet, dass** sich ein erster sich nach innen erstreckender Filter (32A) um eine erste Länge (L1) nach innen erstreckt, sich ein zweiter sich nach innen erstreckender Filter (32B) um eine zweite Länge (L2) nach innen erstreckt, wobei die zweite Länge (L2) größer als die erste Länge (L1) ist.

8. Beleuchtungsanordnung (1) nach Anspruch 7,
**dadurch gekennzeichnet, dass** der zweite sich nach innen erstreckende Filterabschnitt (32B) durch Klebung mit einem Abschnitt des zweiten Gehäuses (10B) gekoppelt ist und der erste sich nach innen erstreckende Filterabschnitt (32A) durch eine Schweißverbindung mit dem ersten Gehäuse (10A) gekoppelt ist.

9. Beleuchtungsanordnung (1) nach einem der Ansprüche 1 bis 8,
**dadurch gekennzeichnet, dass** die Beleuchtungsanordnung (1) eine Scheinwerferanordnung ist.

10. Beleuchtungsanordnung (1) nach einem der Ansprüche 1 bis 8,
**dadurch gekennzeichnet, dass** die Beleuchtungseinrichtung (1) eine Heckbeleuchtungsanordnung ist.

11. Fahrzeug (100), umfassend eine Beleuchtungsanordnung (1) nach einem der Ansprüche 1 bis 10.

## Revendications

1. Ensemble d'éclairage (1) pour véhicule, comprenant :
- une première source de lumière (5A) et une seconde source de lumière (5B) logées chacune dans un boîtier (10A, 10B) et conçues pour émettre de la lumière ;
- une première lentille externe (20A) correspondant à la première source de lumière (5A) et une seconde lentille externe (20B) correspondant à la seconde source de lumière (5B), chaque lentille externe (20A, 20B) étant transparente pour la lumière émise par la source de lumière (5A, 5B) respective dans une direction vers l'extérieur ;
- un premier filtre (30A) et un second filtre (30B) conçus pour homogénéiser la lumière émise ;
dans lequel les lentilles externes (20A, 20B) sont séparées spatialement les unes des autres par un espace de séparation (40) et les filtres (30A, 30B) sont alignés les uns par rapport aux autres ;
chaque filtre (30A, 30B) comprend en outre une partie de filtre s'étendant vers l'intérieur (32A, 32B) qui s'étend dans une direction vers l'intérieur sur un côté respectif de l'espace (40) de telle sorte que l'espace (40) est formé entre les parties de filtre s'étendant vers l'intérieur (32A, 32B),
**caractérisé en ce que,**
le premier filtre (30A) et le second filtre (30B) sont chacun en contact direct avec une surface interne de la lentille externe (20A, 20B) respective ; et
chaque lentille externe (20A, 20B) comprend une partie d'extrémité (24A, 24B) de chaque côté de l'espace (40) et les parties de filtre s'étendant vers l'intérieur (32A, 32B) s'étendent dans une direction vers l'intérieur du côté respectif de l'espace (40) à partir de ces parties d'extrémité (24A, 24B).

2. Ensemble d'éclairage (1) selon la revendication 1, **caractérisé en ce que** les parties de filtre s'étendant vers l'intérieur (32A, 32B) sont formées pour s'étendre parallèlement l'une à l'autre.

3. Ensemble d'éclairage (1) selon l'une des revendications 1 à 2, **caractérisé en ce qu'au** moins une des parties de filtre s'étendant vers l'intérieur (32A, 32B) s'étend jusqu'à une partie du boîtier (10A, 10B) respectif.

4. Ensemble d'éclairage (1) selon la revendication 3,
**caractérisé en ce qu'au** moins une des parties de filtre s'étendant vers l'intérieur (32A, 32B) est accouplée à une partie de liaison du boîtier (10A, 10B).

5. Ensemble d'éclairage (1) selon la revendication 4,
**caractérisé en ce qu'au** moins l'une des parties de filtre s'étendant vers l'intérieur (32A, 32B) forme une partie pointe (34A, 34B) qui est accouplée à une partie de base (12A, 12B) du boîtier (5A, 5B) respectif par une liaison de soudage.

6. Ensemble d'éclairage (1) selon la revendication 4, **caractérisé en ce qu'au** moins l'un des boîtiers (10A, 10B) comprend un canal (14) qui est au moins partiellement recouvert d'un adhésif (16), et dans lequel une partie saillante (36) de la partie de filtre s'étendant vers l'intérieur (32B) correspondante fait saillie dans le canal (14) et entre en contact avec l'adhésif (16).

7. Ensemble d'éclairage (1) selon l'une des revendications 1 à 6, **caractérisé en ce qu'un** premier filtre s'étendant vers l'intérieur (32A) s'étend vers l'intérieur sur une première longueur (L1), un second filtre s'étendant vers l'intérieur (32B) s'étend vers l'intérieur sur une seconde longueur (L2), dans lequel la seconde longueur (L2) est supérieure à la première longueur (L1).

8. Ensemble d'éclairage (1) selon la revendication 7, **caractérisé en ce que** la seconde partie de filtre s'étendant vers l'intérieur (32B) est accouplée par adhérence à une partie du second boîtier (10B) et que la première partie de filtre s'étendant vers l'intérieur (32A) est accouplée par une liaison de soudage au premier boîtier (10A).

9. Ensemble d'éclairage (1) selon l'une des revendications 1 à 8, **caractérisé en ce que** l'ensemble d'éclairage (1) est un ensemble de feu avant.

10. Ensemble d'éclairage (1) selon l'une des revendications 1 à 8, **caractérisé en ce que** l'ensemble d'éclairage (1) est un ensemble de feu arrière.

11. Véhicule (100), comprenant un ensemble d'éclairage (1) selon l'une des revendications 1 à 10.
